# EUROPEAN PATENT APPLICATION

(11) **EP 1 898 250 A1**
(43) Date of publication of application: **12.03.2008**
(21) Application number: 07017274.7
(22) Date of filing: 04.09.2007
(51) Int. Cl.: G02F 1/13357, H01J 61/35

(54) **Light source, backlight assembly and display apparatus capable of reducing infrared signal interference**

(30) Priority: 05.09.2006 KR 20060085266
(71) Applicant: Samsung Electronics Co., Ltd., Yeongtong-gu Suwon-city, Gyeonggi-do 442-742 (KR)
(72) Inventor: Im, Sung-Woon, Chungcheongnam-do (KR); Moon, Kung-Ha, Gyeonggi-do (KR); Kim, Young-Ki, Gyeonggi-do (KR); Kwon, Jin-Mo, Chungcheongnam-do (KR); Shin, Seung-Woon, Chungcheongnam-do (KR)
(74) Representative: Dr. Weitzel & Partner

(57) **Abstract**

A light source that reduces or even prevents signal interference with an infrared remote control unit is presented. The light source includes a lamp body filled with discharge gas and having an inner wall that is coated with a fluorescent layer to generate light. A barrier layer provided at the lamp body. The barrier layer blocks infrared wavelength that is generated in the lamp body from escaping the lamp body. This blocking of the infrared wavelength leakage reduces or prevents any distortion of the infrared signals that are output from the remote control unit, improving the overall product reliability.

## Description

### CROSS-REFERENCE TO RELATED APPLICATION

This application relies for priority upon Korean Patent Application No. 2006-85266 filed on September 5, 2006, the contents of which are herein incorporated by reference in its entirety.

### BACKGROUND OF THE INVENTION

### 1. Field of the Invention

The present invention relates to a light source, a backlight assembly and a display apparatus having the same. More particularly, the present invention relates to a light source capable of reducing errors from infrared signal interference, a backlight assembly, and a display apparatus having the same.

### 2. Description of the Related Art

In general, a liquid crystal display displays images by using certain optical and electrical characteristics of liquid crystals, such as refractive index anisotropy, dielectric index anisotropy, etc. A liquid crystal display includes a liquid crystal display panel substantially displaying images and a backlight assembly providing light to the liquid crystal display panel.

The backlight assembly includes a lamp generating light and optical sheets that improve optical characteristics of the light emitted from the lamp and provide the light to the liquid crystal display panel. The backlight assembly is classified into an edge-illumination type backlight assembly and a direct-illumination type backlight assembly according to the position of the lamp The edge-illumination type backlight assembly includes a lamp provided at one side of a light guide plate that guides the light and supplies the light to the liquid crystal display panel. The direct-illumination type backlight assembly includes a plurality of lamps disposed under a liquid crystal display panel while facing the liquid crystal display panel, and is suitable for a large-sized liquid crystal display that is required from a large-sized screen such as TV.

In general, an image processing device, such as TV, receives various control signals generated from a remote control according to user's operation. These control signals may include a signal for converting channels, adjusting volumes, controlling images, etc., and the image processing device displays images according to the control signals. Commonly, the remote control outputs control signals in the form of an infrared signal having wavelength bands in a range between 20 kHz and 50 kHz. However, since the light emitted from the lamp includes infrared wavelength, interference occurs between the infrared ray output from the remote control and the infrared ray output from the lamp. In particular, as the lamp becomes longer, the amount of light that is generated in the infrared wavelengths increases, causing greater infrared interference between the remote control and the lamp. Since the infrared interference induces distortion of the infrared signal output from the remote control, reliability of products is degraded.

### SUMMARY OF THE INVENTION

Therefore, the present invention provides a light source capable of reducing the leakage of infrared ray to prevent signal interference.

The present invention also provides a backlight assembly having the light source.

The present invention also provides a display apparatus having the backlight assembly.

In one aspect of the present invention, a light source includes a lamp body and a barrier layer. The lamp body is filled with a discharge gas and has an inner wall that is coated with a fluorescent layer to generate light inside the lamp body. The barrier layer is formed at the lamp body and blocks infrared ray that is generated inside the lamp body from escaping the lamp body.

The light source may further include electrodes that are coupled to the lamp body and supply the lamp body with power. The electrodes may be provided at the ends of the lamp body.

The barrier layer may cover the entire surface of the lamp body, or may be disposed on just the entire surface of a light emitting region where the light primarily escapes the lamp body, or may be disposed on a part of the light emitting region. When the barrier layer is disposed on a part of the light emitting region, the barrier layer may be positioned adjacent to the electrode sections. The barrier layer may be coated on an outer wall or an inner wall of the lamp body or be incorporated into the lamp body.

In another aspect of the present invention, a light source includes a lamp body and an infrared-blocking material. The lamp body is filled with a discharge gas and has an inner wall that is coated with a fluorescent layer to generate infrared ray and visible light. The infrared-blocking material that is incorporated into the lamp body prevents the infrared ray from escaping the lamp body while allowing the visible light to escape.

In yet another aspect of the present invention, a backlight assembly includes a plurality of light sources and an optical member. The light sources receive power to generate light and output the light after filtering out infrared wavelength from the light. The optical member is disposed on the light sources and outputs the light from the light sources after improving brightness of the light.

In yet another aspect of the present invention, a display apparatus includes a backlight assembly and a display panel. The backlight assembly includes a plurality of light sources and an optical member. The light sources receive power to generate light and output the light after filtering out infrared wavelength. The optical member is disposed on the light sources and outputs the light of the light sources after improving brightness of the light. The display panel is disposed on the optical member and displays images using the light from the optical member.

The display apparatus may further include a remote control and a main controller. The remote control may output an infrared signal according to commands from a user. The main controller may output a control signal for controlling the display panel in response to the infrared signal and provide the control signal to the display panel.

### BRIEF DESCRIPTION OF THE DRAWINGS

The above and other advantages of the present invention will become readily apparent by reference to the following detailed description when considered in conjunction with the accompanying drawings wherein:
FIG. 1 is a perspective view showing a light source according to an exemplary embodiment of the present invention;
FIG. 2 is a sectional view taken along a line I - I ' shown in FIG. 1;
FIG. 3 is a sectional view showing a light source according to another embodiment of the present invention;
FIG. 4 is a sectional view showing a light source according to another embodiment of the present invention;
FIG. 5 is a sectional view showing a light source according to another embodiment of the present invention;
FIG. 6 is a sectional view showing a light source according to another embodiment of the present invention;
FIG. 7 is a sectional view showing a light source according to another embodiment of the present invention;
FIG. 8 is an exploded perspective view showing a backlight assembly according to an exemplary embodiment of the present invention;
FIG. 9 is a sectional view taken along a line II-II' shown in FIG. 8;
FIG. 10 is a block diagram showing a liquid crystal display according to an exemplary embodiment of the present invention; and
FIG. 11 is an exploded perspective view showing a backlight assembly and a display panel assembly shown in FIG. 10.

### DESCRIPTION OF THE EMBODIMENTS

Hereinafter, the present invention will be explained in detail with reference to the accompanying drawings. In the drawings, the thickness of layers, films, and regions are exaggerated for clarity. Like numerals refer to like elements throughout. It will be understood that when an element such as a layer, film, region, or substrate is referred to as being "on" another element, it can be directly on the other element or intervening elements may also be present.

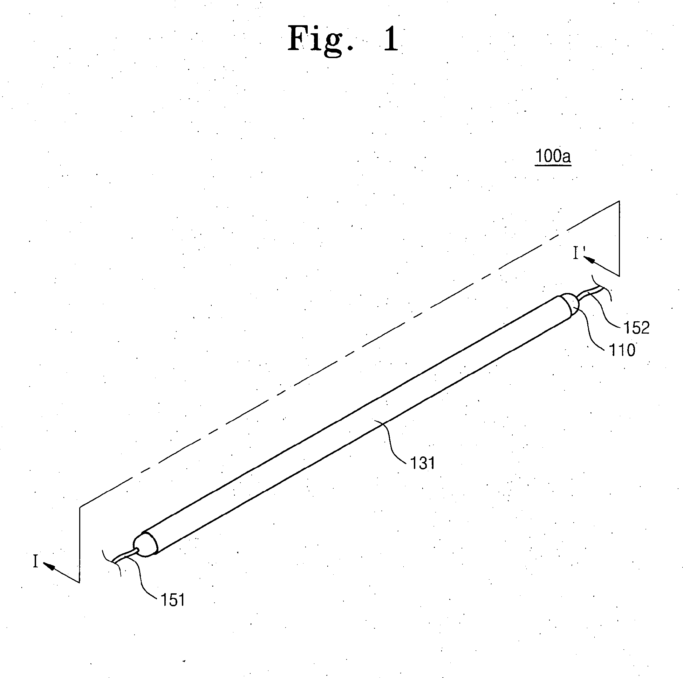

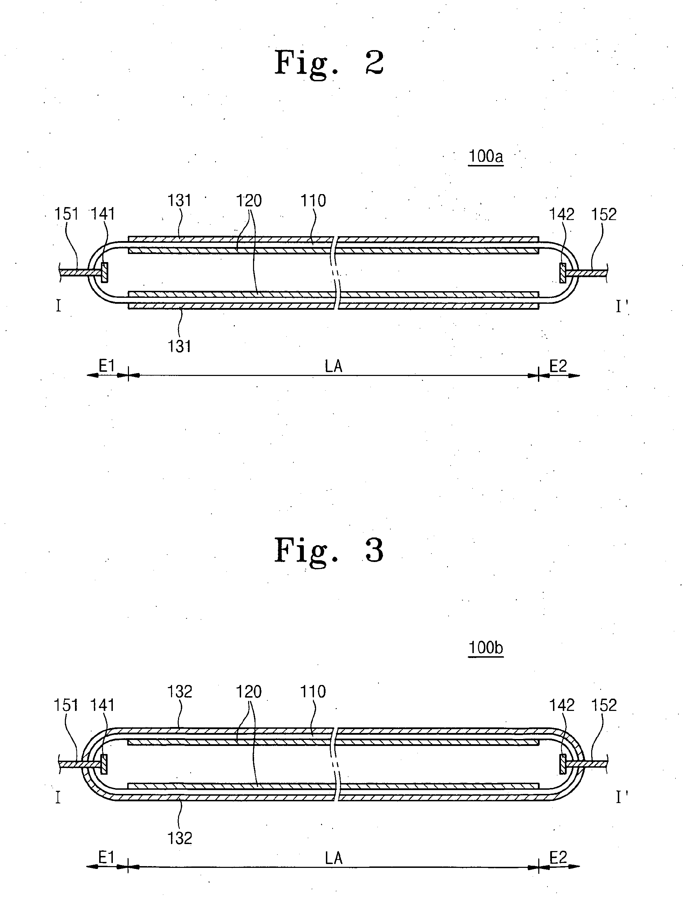

FIG. 1 is a perspective view showing a light source according to an exemplary embodiment of the present invention, and FIG. 2 is a sectional view taken along a line I - I' shown in FIG. 1.

Referring to FIGS. 1 and 2, a light source 100a of the present invention includes a lamp body 110, a fluorescent layer 120 and a barrier layer 131.

The lamp body 110 has a tube shape and includes a transparent glass that allows the light generated inside the lamp body 110 to escape to the exterior. The lamp body 110 has a light emitting region LA where the light primarily -makes its escape from the lamp body 110 to be emitted, and first and second ends E1 and E2
where substantially no light escapes. A vaccum is maintained inside the lamp body 110 and at least two discharge gases are introduced into the interior of the lamp body 110. The discharge gas may be one or more of mercury (Hg), neon (Ne), argon (Ar); krypton (Kr), xenon (Xe), etc. When power is applied to the lamp body 110, the discharge gas is ionized to generate electrons. Hence, an ultraviolet ray having a wavelength shorter than that of visible light is generated.

The fluorescent layer 120 is coated on an inner wall of the lamp body 110 in the light emitting region LA. The fluorescent layer 120 converts the ultraviolet ray generated from the interior of the lamp body 110 into visible light, which then escapes the lamp body 110 to be emitted.

The barrier layer 131 is provided at the light emitting region LA to cover an entire area of the light emitting region LA. The barrier layer 131 is coated on an outer wall of the lamp body 110 to block any infrared ray emitted from the lamp body 110. That is, the light emitted from the lamp body 110 may initially include infrared ray. As the lamp 110 becomes longer, the amount of the infrared ray generated from the lamp body 110 increases.

The infrared ray emitted from the light source 100a causes signal interference with a remote control unit, which controls electronic devices using an infrared signal. As a result, the infrared ray output from the remote control unit may be distorted. For this reason, the barrier layer 131 blocks the infrared ray emitted from the lamp body 110 to prevent the distortion of the signal output from the remote control unit.

The barrier layer 131 includes an organic material that absorbs the infrared ray, such as, zirconium dioxide, polycarbonate, etc.

In the present embodiment, the light source 100a includes the separate barrier layer 131 to block the infrared ray output from the lamp body 110. However, the lamp body 110 may include a material that blocks the infrared ray without using the separate barrier layer 131. That is, when manufacturing the lamp body 110, a material that blocks the infrared ray can be added into the lamp body 110 to block the infrared ray. In this case, the lamp body 110 itself prevents the infrared ray from escaping to the exterior.

The light source 100a further includes first and second electrodes 141 and 142 that supply the lamp body 110 with power. The first and second electrodes 141 and 142 are provided at the first and second ends E1 and E2 of the lamp body 110, respectively, and the external power is applied to the first and second electrodes 141 and 142.

According to the present' exemplary embodiment, the first and second electrodes 141 and 142 include internal electrodes inside the lamp body 110. However, the first and second electrodes 141 and 142 can be prepared in the form of external electrodes disposed outside the lamp body 110 in other embodiments. The external electrodes are provided at the first and second ends E1 and E2 of the lamp body 110 while surrounding the peripheral surface of the lamp body 110.

The first and second electrodes 141 and 142 are electrically connected to first and second wires 151 and 152; which are coupled to a power source. The first and second wires 151 and 152 are electrically connected to a power supply (not shown) that supplies power to the first and second electrode sections 141 and 142, respectively.

FIG. 3 is a sectional view showing a light source according to another exemplary embodiment of the present invention.

Referring to FIG. 3, a light source 100b of the present invention has substantially the components as those of the light source 100a shown in FIGS. 1 and 2 except for a barrier layer 132. Accordingly, in the following description about the light source 100b, the same reference numerals will be assigned to the same components, and detailed descriptions of already-described components will be omitted to avoid redundancy.

The light source 100b includes a lamp body 110, a fluorescent layer 120, first and second electrode sections 141 and 142 and a barrier layer 132. The barrier layer 132 is coated on the entire outer wall of the lamp body 110 to block the infrared ray from being emitted. That is, the barrier layer 132 is coated not only on a light emitting region LA where the light makes its primary escape but also on ends E1 and E2 of the lamp body 110 having the first and second electrodes 141 and 142 disposed thereon. Therefore, any infrared ray that teaks from the ends E1 and E2 of the lamp body 110 can be blocked in addition to the infrared ray output through the light emitting region LA.

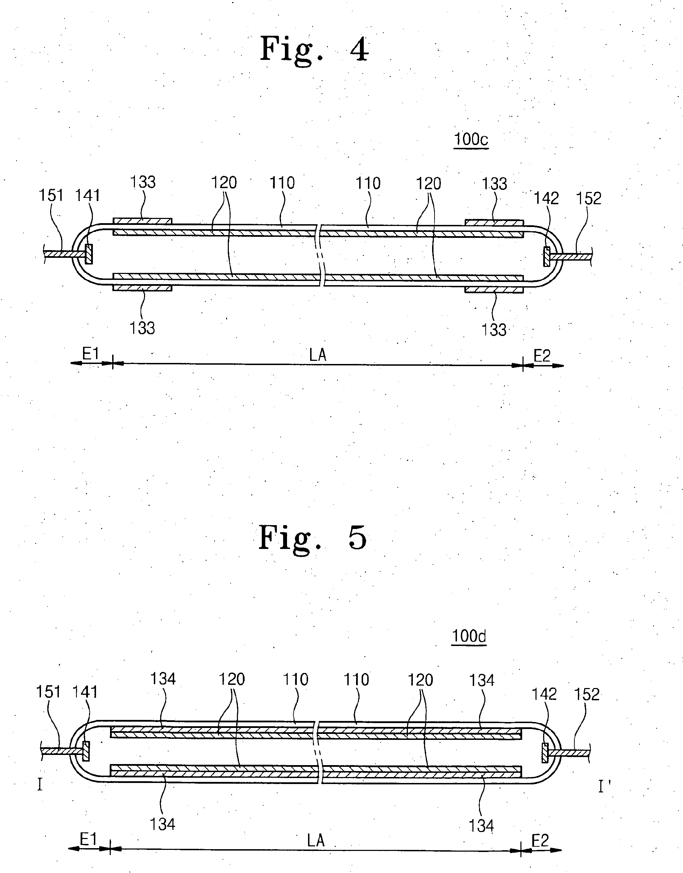

FIG. 4 is a sectional view showing a light source according to another exemplary embodiment of the present invention.

Referring to FIG. 4, a light source 100c of the present invention has substantially the same components as those of the light source 100a shown in FIGS. 1 and 2 except for a barrier layer 133. Accordingly, in the following description about the light source 100c, the same reference numerals will be assigned to the same components and detailed descriptions of already-described components will be omitted to avoid redundancy.

The light source 100c includes a lamp body 110, a fluorescent layer 120, first and second electrodes 141 and 142 and a barrier layer 133. The barrier layer 133 is coated on an outer wall of the lamp body 110 to block the infrared ray output from the lamp body 110. The barrier layer 133 is provided at a light emitting region LA
where the light makes its primary escape, and partially covers the light emitting region LA.

In detail, the barrier layer 133 is positioned adjacent to the first and second electrodes 141 and 142 that are provided at the ends E1 and E2 of the lamp body 110. That is, in the light emitting region LA, much infrared ray is escapes through the region of the lamp body 110 that is adjacent to the first and second electrodes 141 and 142. Therefore, if the barrier layer 133 is disposed at the region adjacent to the first and second electrodes 141 and 142, a significant portion of the infrared ray output from the lamp body 110 can be efficiently blocked. Also, the brightness of the region adjacent to the first and second electrodes 141 and 142 is relatively higher than that of other regions. Therefore, if the barrier layer 133 is disposed at the region adjacent to the first and second electrodes 141 and 142, the barrier layer 133 partially absorbs the light emitted through the region, so that the brightness uniformity of the lamp body 110 can be improved.

FIG. 5 is a sectional view showing a light source according to another exemplary embodiment of the present invention.

Referring to FIG. 5, a light source 100d of the present invention has substantially the same components as those of the light source 100a shown in FIGS. 1 and 2 except for a barrier layer 134. Accordingly, in the following description about the light source 100d, the same reference numerals will be assigned to the same components, and detailed descriptions of already-described components will be omitted in order to avoid redundancy.

The light source 100d includes a lamp body 110, a fluorescent layer 120, first and second electrodes 141 and 142 and a barrier layer 134. The barrier layer 134 is coated on an inner wall of the lamp body 110 and the fluorescent layer 120 is provided on an upper surface of the barrier layer 134. The barrier layer 134 is provided in the light emitting region LA where the light is primarily emitted. The barrier layer 134 covers the entire surface of the light emitting region LA, so that the infrared ray generated from inside the lamp body 110 can be prevented from leaving the lamp body 110.

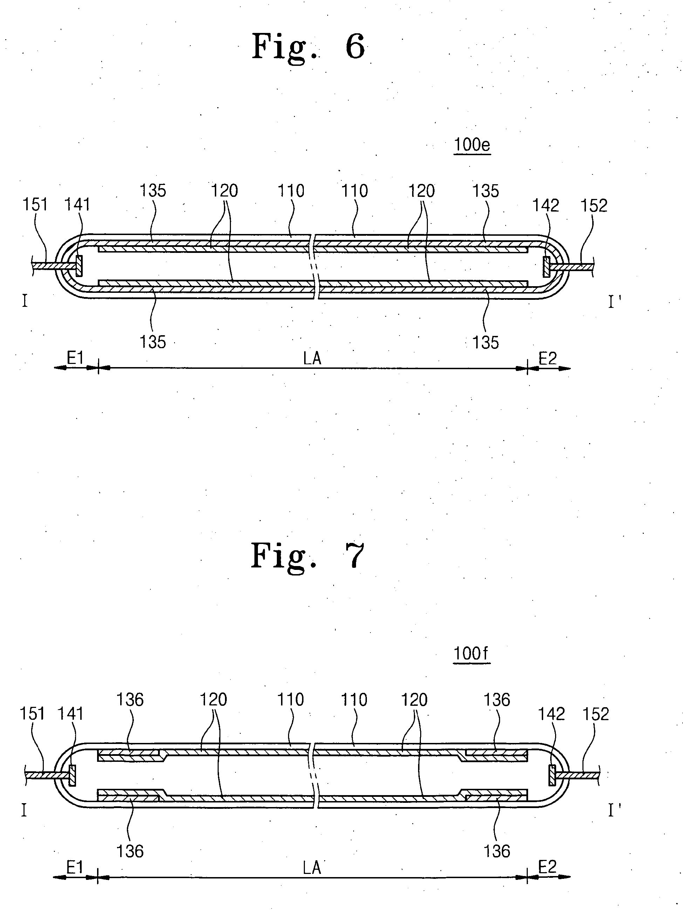

FIG. 6 is a sectional view showing a light source according to another exemplary embodiment of the present invention.

Referring to FIG. 6, a light source 100e of the present invention has substantially the same components as those of the light source 100a shown in FIGS. 1 and 2 except for a barrier layer 135. Accordingly, in the following description about the light source 100e, the same reference numerals will be assigned to the same components, and detailed descriptions of already-described components will be omitted in order to avoid redundancy.

The light source 100e includes a lamp body 110, a fluorescent layer 120, first and second electrodes 141 and 142 and a barrier layer 135. The barrier layer 135 is coated on the entire inner wall of the lamp body 110, so that the infrared ray generated inside the lamp body 110 is prevented from being escapling the lamp body 110. That is, the barrier layer 135 is coated not only on a light emitting region LA where the light is output, but also on the opposite ends E1 and E2 of the lamp body 110 having the first and second electrodes 141 and 142 disposed thereon. Therefore, any infrared ray that would have leaked from the ends E1 and E2 of the lamp body 110 can be blocked in addition to the infrared ray output from the light emitting region LA. The fluorescent layer 120 is coated on the barrier layer 135 to cover the entire surface of the light emitting region LA.

FIG. 7 is a sectional view showing a light source according to another exemplary embodiment of the present invention.

Referring to FIG. 7, a light source 100f of the present invention has substantially the same components as those of the light source 100a shown in FIGS. 1 and 2 except for a barrier layer 136. Accordingly, in' the following description about the light source 100f, the same reference numerals will be assigned to the same components, and detailed descriptions of already-described components will be omitted in order to avoid redundancy.

The light source 100f includes a lamp body 110, a fluorescent layer 120, first and second electrodes 141 and 142 and a barrier layer 136. The barrier layer 136 is coated on an inner wall of the lamp body 110, so that the infrared ray generated inside the lamp body 110 is prevented from escaping the lamp body 110. The barrier layer 136 is provided at a light emitting region LA and partially covers the light emitting region LA. Especially, the barrier layer 136 is positioned adjacent to the first and second ends E1 and E2 having first and second electrodes 141 and 142 disposed thereon. The fluorescent layer 120 is coated on an inner wall of the lamp body 110 having the barrier layer 135 thereon, and covers the entire surface of the light emitting region LA. Therefore, a portion of the fluorescent layer 120 (i.e., the portion that is not on the barrier layer 136) is directly deposited on the upper surface of the lamp body 136.

Hereinafter, a backlight assembly employing the light source 100a will be described in detail with reference to accompanying drawings.

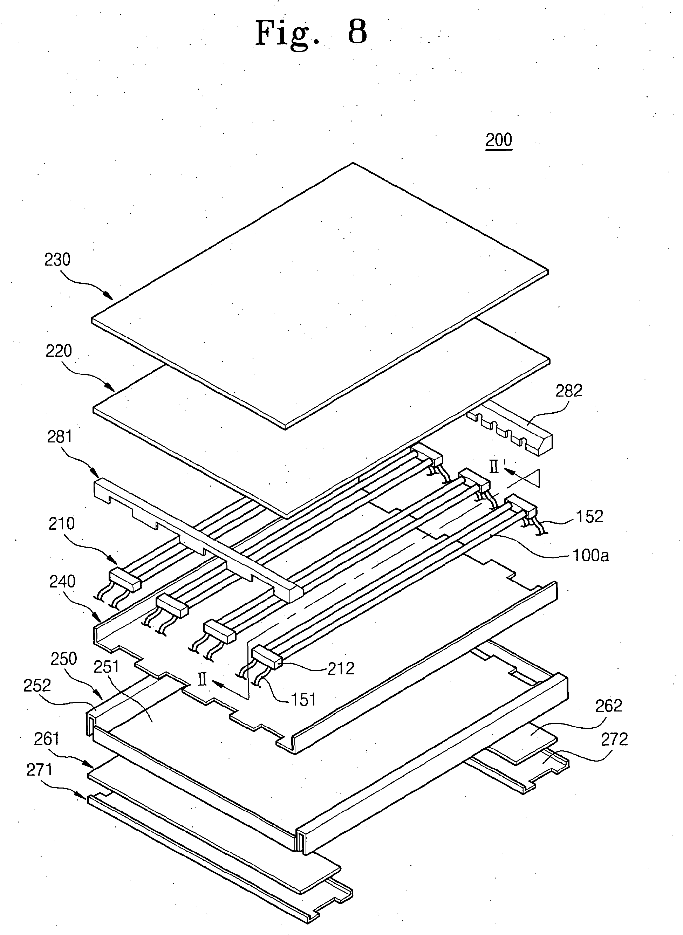

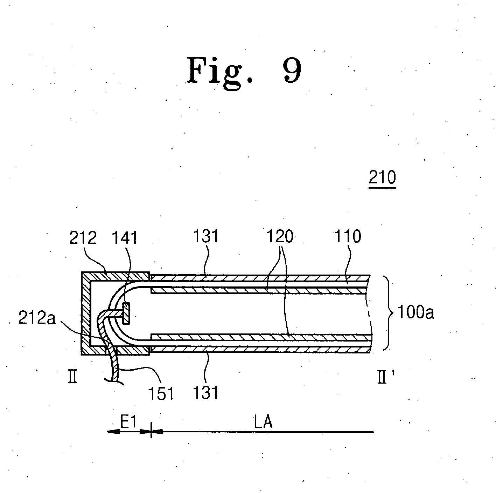

FIG. 8 is an exploded perspective view showing a backlight assembly according to an exemplary embodiment of the present invention, and FIG. 9 is a sectional view taken along a line II-II' shown in FIG. 8.

Referring to FIGS. 8 and 9, the backlight assembly 200 includes a light supply unit 210, a diffusion plate 220, an optical sheet 230, a reflection plate 240 and a bottom chassis 250.

The light supply unit 210 includes a plurality of light sources 100a and a plurality of lamp holders that hold the light sources 100a.

The light sources 100a extend in one direction and are arranged in a direction that is perpendicular to the length of the light sources 1 00a while being spaced apart from each other. Since each of the light sources 100a has the same structure as that of the light source 100a shown in FIGS. 1 and 2, the same reference numeral will be assigned to the same components and detailed description of the light source 100a will be omitted.

The light source 100a includes a lamp body 110 emitting light, a fluorescent layer 120 provided on an inner wall of the lamp body 110, a barrier layer 131 provided on an outer wall of the lamp body 110, and first and second electrodes 141 and 142 receiving power.

In the present exemplary embodiment, the barrier layer 131 covers only the light emitting region LA where most of the light escapes the lamp holder 110. However, in other embodiments, the barrier layer 131 can cover the entire surface of the lamp body 110 or partially cover the light emitting region LA depending on the embodiment. Furthermore, although the barrier layer 131 is coated on the outer wall of the lamp body 110 in the present embodiment, the barrier layer 131 can also be coated on the inner wall of the lamp body 110.

The barrier layer 131 reduces or prevents infrared interference between a remote control, that controls electronic devices using the infrared signal and the light source 100a. As explained above, when the remote control controls a device to which the backlight assembly 200 is applied, an interference may occur between the infrared signal output from the remote control unit and the infrared ray output from the light source 100a. The barrier layer 131 blocks the infrared ray output from the lamp body 110 to prevent the distortion of the infrared signal from the remote control unit.

In the present exemplary embodiment, the barrier layer 131 is coated on the inner wall of the lamp body 110; however, this is not a limitation of the invention and the barrier layer 131 can be coated on the diffusion plate 220.

Lamp holders 212 are provided at both ends of the light sources 100a and fixed to the bottom chassis 250. In the embodiment of FIG. 8, two light sources 100a adjacent to each other are inserted into each if the lamp holders 212. However, this is not a limitation of the invention and only one light source can be inserted into each lamp holder 212 in some embodiments.

The lamp holder 212 is provided with a hole 212a through which first and second wires 151 and 152 of the light source 100a extend. As shown in FIG. 9, the first wire 151 of the light source extends to the exterior of the lamp holder 212 through the hole 212a.

The diffusion plate 220 is provided above the light supply unit 210. The diffusion plate 220 diffuses the light output from the light sources to improve the brightness uniformity. The diffusion plate 220 is prepared in the form of a plate having a predetermined thickness and is spaced apart from the light source 100a by a predetermined distance. The diffusion plate 220 includes a transparent material that allows the light to pass therethrough and a diffusion agent that diffuses the light.

The diffusion plate 220 may include a barrier layer is coated on a bottom surface or a top surface of the diffusion plate 220. The barrier layer of the diffusion plate 220 blocks the infrared ray emitted from the light sources 100a to prevent the distortion of the signal output from the remote control unit.

The diffusion plate 220 is provided on the light supply unit 210 with at least one optical sheet 230. The optical sheet 230 converts the path of the light that is output from the diffusion plate 220 to improve brightness properties. The optical sheet 230 may include a prism sheet that concentrates the light to improve the front brightness and a diffusion sheet that diffuses the light to improve the brightness uniformity.

The reflection plate 240 is provided below the light sources 100a. The reflection plate 240 reflects the light from the light sources 100a to improve the efficiency of light usage. The reflection plate 240 is provided with grooves along the edges that correspond to the lamp holders 212 so that the lamp holders 212 are inserted into the grooves.

The light supply unit 210 and the reflection plate 240 are received in the bottom chassis 250. The bottom chassis 250 includes a bottom surface 251 on which the reflection plate 240 rests and sidewalls 252 that extend from the edges of the bottom surface 251 to form a receiving space accommodating the light supply unit 210 therein. In the embodiment of FIG. 8, a part of the sidewalls extending lengthwise along the light source 100a is bent in a U shape to facilitate coupling with other components.

The backlight assembly 200 further includes first and second inverter boards 261 and 262 by which power is applied to the light sources. The first inverter board 261 is electrically connected to the first wires of the light sources, and the second inverter board 261 is electrically connected to the second wires of the light sources. The first and second inverter boards 261 and 262 output AC power having high electric potential, which is suitable to drive the light source 100a, by boosting AC power having low electric potential applied from the exterior. The first and second inverter boards 261 and 262 are disposed under the bottom chassis 250 and arranged at the ends of the light sources 100a, respectively.

In the present exemplary embodiment, the backlight assembly 200 includes two inverter boards 261 and 262; however, this is not a limitation of the invention and the backlight assembly 200 can include only one inverter board in some embodiments. In the latter case, light sources are configured in such a manner that both first and second wires 151 and 152 are connected with the inverter board.

The backlight assembly 200 further includes first and second shield cases 271 and 272 to protect the first and second inverter boards 261 and 262, respectively. The first and second shield cases 271 and 272 are coupled to the bottom surface 251 of the bottom chassis 250 while covering the first and second inverter boards 261 and 262. The first and second shield cases 271 and 272 protect the first and second inverter boards 261 and 262 against external impacts and shield electromagnetic waves generated from the first and second inverter boards 261 and 262.

In addition, the backlight assembly 200 further includes first and second side molds 281 and 282 that fix the light sources to the bottom chassis 250. The first and second side molds 281 and 282 are arranged at the ends of the light sources 100a. The first and second side molds 281 and 282 cover the lamp holders 212 to prevent the lamp holders 212 from being exposed and fix the positions of the lamp holders. The diffusion plate 220 and the optical sheet 230 are provided on the first and second side molds 281 and 282. The first and second side molds 281 and 282 support the ends of the diffusion plate 220 and guide the position of the diffusion plate 220.

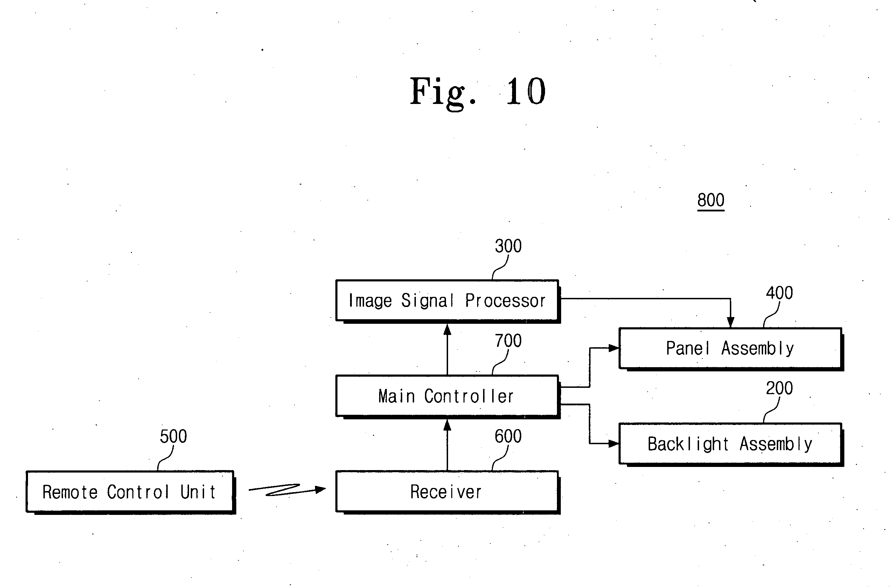

FIG. 10 is a block diagram showing a display apparatus according to an exemplary embodiment of the present invention.

Referring to FIG. 10, a display apparatus 800 includes a backlight assembly 200, an image signal processor 300, a panel assembly 400, a remote control unit 500, a receiver 600 and a main controller 700.

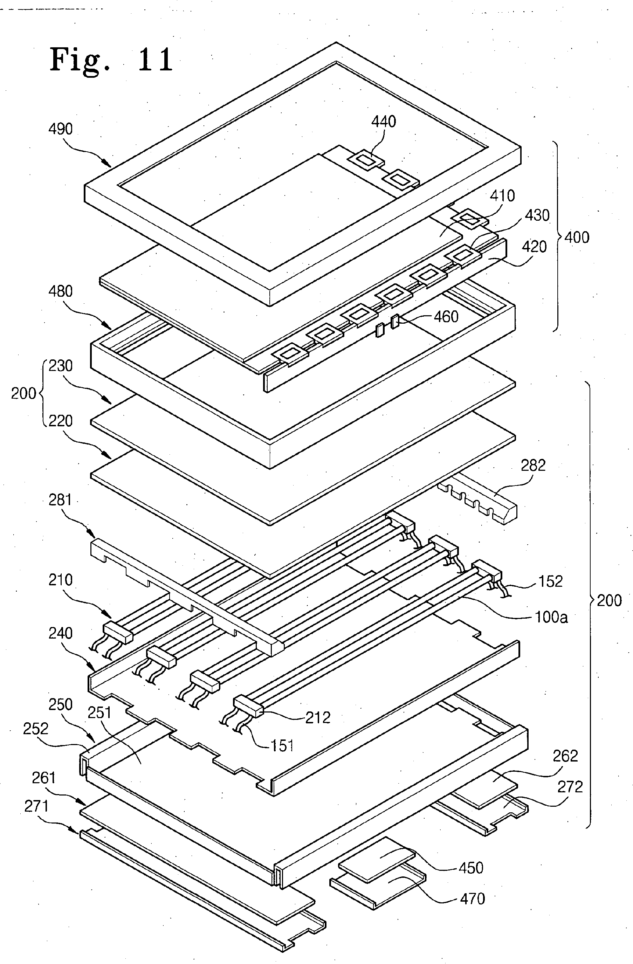

The backlight assembly 200 generates light and provides the light to the panel assembly 400. The image signal processor 300 decodes image signals received from an external device and provides the decoded image signals to the panel assembly 400. The panel assembly 400 displays images corresponding to the image signals using the light. The backlight assembly 200 and the panel assembly 400 will be described later in detail with reference to FIG. 11.

The remote control unit 500 outputs an infrared signal having a wavelength between about 20 kHz and about 50 kHz. The remote control unit 500 may be but is not limited to being a remote control. The infrared signal output from the remote control unit 500 includes an operation command to operate the display apparatus 800. As an example of the present invention, the operation command may include a command to adjust the image quality, a command, to adjust the image size, the command to adjust sound output corresponding to the image, the command to convert the image output to the panel assembly 400, etc. When the display apparatus 800 outputs the sound corresponding to the image, a separate device may be necessary to output the sound.

The infrared signal output from the remote control unit 500 is transferred to the receiver 600. The receiver 600 outputs an electrical signal corresponding to the infrared signal and provides the signal to the main controller 700. Therefore, a user can manipulate the display apparatus 800 in a wireless manner using the remote control unit 500.

The main controller 700 outputs a control signal to control the backlight assembly 200, the image signal processor 300 and the panel assembly 400 in response to the electric signals

Hereinafter, the structure of the backlight assembly 200 and the panel assembly 400 will be explained with reference to accompanying drawings.

FIG. 11 is an exploded perspective view showing the backlight assembly and the display panel assembly shown in FIG. 10.

Referring to FIGS. 10 and 11, the backlight assembly 200 has the same structure as that of the backlight assembly 200 shown in FIG. 8. Thus, the same reference numerals will be assigned to the same components and detailed descriptions of already-described components will be omitted to avoid redundancy.

The light supply unit 210 provided in the backlight assembly 200 generates light. Each of the light sources 100a provided in the light supply unit 210 includes the barrier layer 131 (see, FIG. 1) that blocks the infrared ray therefrom. The barrier layer 131 blocks the infrared ray output from the lamp body 110 to prevent signal interference between the light source 100a and the remote control unit 500, and to prevent the infrared signal output from the remote control unit 500 from being distorted. Therefore, control errors due to distortion of the infrared signal can be prevented or reduced and the reliability of products can be improved.

The panel assembly 400 is provided on the backlight assembly 200. The panel assembly 400 includes a liquid crystal display panel 410, a source printed circuit board 420, source tape carrier packages 430 (hereinafter, referred to as "TCP") and gate TCPs.

The liquid crystal display panel 410 is disposed on the light sources 100a and displays images using the light emitted by the light sources 100a. The liquid crystal display panel 410 includes two substrates and a liquid crystal layer interposed between them. The source printed circuit board 420 is electrically connected with the liquid crystal display panel 410 through the source TCPs 430. The source printed circuit board 420 outputs a data driving signal in correspondence with the image signal and provides the data driving signal to the source TCPs 430. The gate TCPs 430 are attached to one side of the liquid crystal panel 410 and output gate signals.

The panel assembly 400 further includes a control printed circuit board 450, which controls the liquid crystal display panel 410 and the source printed circuit board 420, and a flexible printed circuit board 460, which electrically connects the control printed circuit board 450 with the source printed circuit board 420.

The control printed circuit board 450 is disposed on the rear of the bottom chassis 250 of the backlight assembly 200. The control printed circuit board 450 outputs an electrical signal to control the liquid crystal display panel 410 in correspondence with the control signal received from the main controller 700. Further, the control printed circuit board 450 receives the image signals from the image signal processor 300 and provides the image signals to the source printed circuit board 420.

The control printed circuit board 450 is protected by a third shield case 470. The third shield case 470 is coupled to the bottom surface 251 of the bottom chassis 250 while covering the control printed circuit board 450. The third shield case 470 protects the control printed circuit board 450 against, external impacts and shields electromagnetic waves generated from the control printed circuit board 450.

The panel assembly 400 further includes a mold frame 480 that receives the liquid crystal display panel 410. The mold frame 480 is coupled to the side walls 252 of the bottom chassis 250 while pressing the ends of the diffusion plate 220 and the optical sheet 230. It will be difficult to fabricate the mold frame 480 as a single integrated structure as the size of the liquid crystal display panel 410 becomes larger. Thus, in some embodiments, the mold frame 480 may be fabricated as multiple segments that can be combined into a single structure.

In addition, the panel assembly 400 further includes a top chassis 490 that guides the position of the liquid crystal display panel 410. The top chassis 490 is coupled to the bottom chassis 250 and allows the liquid crystal display panel 410 to be attached to the mold frame 480. The source printed circuit board 420 is interposed between the sidewalls 252 of the bottom chassis 250 and the top chassis 490.

According to the above, the light source includes a barrier layer that blocks infrared rays to reduce the signal interference with the remote control unit that controls electric devices using infrared signals. This way, distortion of the infrared signal output from the remote control unit is reduced or prevented. Accordingly, control errors due to the distortion of the infrared signal can be reduced or prevented and the reliability of the products can be improved

Although exemplary embodiments of the present invention have been described, it is understood that the present invention should not be limited to these exemplary embodiments and various changes and modifications can be made by one ordinary skilled in the art within the spirit and scope of the present invention as hereinafter claimed.

## Claims

1. A light source comprising:
a lamp body filled with a discharge gas and having an inner wall coated with a fluorescent layer, the lamp body generating light inside the lamp body; and
a barrier layer formed at the lamp body to block infrared ray that is generated inside the lamp body from escaping the lamp body.

2. The light source of claim 1, wherein the barrier layer covers an entire surface of the lamp body.

3. The light source of claim 1, wherein the barrier layer is disposed on a light emitting region where the light is output.

4. The light source of claim 3, wherein the barrier layer covers an entire surface of the light emitting region.

5. The light source of claim 3, wherein the barrier layer partially covers the light emitting region.

6. The light source of claim 5, further comprising electrodes that are coupled to the lamp body and supply the lamp body with power,
wherein the electrodes are provided at ends of the lamp body, respectively, and the barrier layer is positioned adjacent to the electrodes.

7. The light source of claim 1, wherein the barrier layer is coated on an outer wall of the lamp body.

8. The light source of claim 1, wherein the barrier layer is coated on an inner wall of the lamp body.

9. The light source of claim 1, wherein the barrier layer comprises an organic material that absorbs the infrared ray.

10. The light source of claim 9, wherein the organic material comprises polycarbonate.

11. The light source of claim 1, wherein the barrier layer comprises zirconium dioxide.

12. A light source comprising:
a lamp body filled with a discharge gas and having an inner wall coated with a fluorescent layer to generate infrared ray and visible light;
an infrared-blocking material incorporated into the lamp body to prevent the infrared ray from escaping the lamp body while allowing the visible light to escape.

13. The light source of claim 12, wherein the infrared-blocking material comprises one of zirconium dioxide and polycarbonate.

14. A backlight assembly comprising:
a plurality of light sources that receive power to generate light and output the light while filtering out infrared wavelength from the light; and
an optical member disposed on the light sources and outputting the light output from the light sources after improving brightness of the light.

15. The backlight assembly of claim 14, wherein each of the light sources comprises:
a lamp body filled with a discharge gas and having an inner wall coated with a fluorescent layer, the lamp body generating the light; and
a barrier layer provided on the lamp body to block infrared ray from escaping the lamp body.

16. The backlight assembly of claim 14, wherein the optical member comprises a barrier layer provided on the lamp body to block infrared ray from escaping the light sources.

17. A display apparatus comprising:
a backlight assembly including:
a plurality of light sources that receive power to generate light and output the light after filtering out infrared wavelength, and
an optical member disposed on the light sources and outputting the light output from the light sources after improving brightness of the light;
a display panel disposed on the optical member and displaying images using the light from the optical member;
a remote control outputting an infrared signal according to commands from a user; and
a main controller outputting a control signal to control the display panel in response to the infrared signal and providing the control signal to the display panel.

18. The display apparatus of claim 17, wherein each of the light sources comprises:
a lamp body filled with a discharge gas and having an inner wall coated with a fluorescent layer, the lamp body generating the light; and
a barrier layer provided at the lamp body and blocking infrared ray that is generated in the lamp body from exiting the lamp body.
